**Europäisches Patentamt**

**European Patent Office**

**Office européen des brevets**

(19)

(11) Veröffentlichungsnummer: **0 235 396 B1**

(12)

# EUROPÄISCHE PATENTSCHRIFT

(45) Veröffentlichungstag der Patentschrift:
**18.07.90**

(51) Int. Cl.⁵: **B32B 25/08**

(21) Anmeldenummer: **86118177.4**

(22) Anmeldetag: **31.12.86**

(54) Bauteile aus Polyphenylenethern und elastomeren, thermoplastisch verarbeitbaren styrolhaltigen Blockcopolymeren sowie Verfahren zu ihrer Herstellung.

(30) Priorität: **28.02.86 DE 3606473**

(43) Veröffentlichungstag der Anmeldung:
**09.09.87 Patentblatt 87/37**

(45) Bekanntmachung des Hinweises auf die Patenterteilung:
**18.07.90 Patentblatt 90/29**

(84) Benannte Vertragsstaaten:
**AT BE DE FR GB IT NL SE**

(56) Entgegenhaltungen:
**EP-A- 0 196 407**
**DE-A- 2 343 870**
**DE-A- 3 602 705**
**GB-A- 2 048 903**

(73) Patentinhaber: **HÜLS AKTIENGESELLSCHAFT, - RSP Patente / PB 15 - Postfach 13 20, D-4370 Marl 1(DE)**

(72) Erfinder: **Jadamus, Hans, Dr., Hervester Strasse 8, D-4370 Marl(DE)**
Erfinder: **Richter, Klaus-Peter, Dammstrasse 18, D-4370 Marl(DE)**

**Beschreibung**

Die Erfindung betrifft Bauteile aus fest miteinander verbundenen harten und elastomeren Segmenten, die unter Verwendung von Polyphenylenethern und styrolhaltigen Blockcopolymeren durch thermoplastische Formgebung hergestellt werden.

Häufig kann ein einziger Werkstoff nicht alle Eigenschaften beitragen, die von einem Gegenstand verlangt werden. Solche unvereinbaren Eigenschaftskombinationen sind z. B. gleichzeitig hohe Festigkeit und Steifheit auf einer und Gummielastizität und Rutschfestigkeit auf der anderen Seite.

Um Bauteile mit Eigenschaften auszurüsten, die ein einziger Werkstoff nicht aufweisen kann, setzt man sie aus Teilen verschiedener Werkstoffe zusammen. Für die Funktionstüchtigkeit derartiger Gegenstände ist eine feste Haftung zwischen den unterschiedlichen Teilen eine notwendige Voraussetzung.

Aus Thermoplasten und Gummi zusammengesetzte Gegenstände werden üblicherweise durch mechanische Befestigung, Kleben oder Covulkanisation unter Verwendung besonderer Covulkanisationshilfsmittel verbunden.

Mit mechanischen Befestigungen ist nur ein für geringe Ansprüche ausreichender Kraftschluß zu erzielen.

Verklebungen sind in größeren Serien nur aufwendig herstellbar. Der Einsatz eines Klebemittels führt vielfach zu zusätzlichen Materialproblemen.

Das bisher wirkungsvollste Verfahren bestand darin, den steifen Formstoff und die Kautschukmasse zu covulkanisieren. Dies erforderte eine Vorbehandlung der Oberfläche des steifen Formstoffs und/oder eine besondere Ausrüstung der Kautschukmasse.

Eine Möglichkeit der Oberflächenbehandlung des Thermoplasten (vgl. L.H. Nitzsche, Kautschuk + Gummi, Kunststoffe 36, 572 bis 576 (1983)) besteht z. B. darin, ihn mit einer wäßrigen Lösung aus Vinylpyridin-Latex, Resorcin und Formaldehyd zu bestreichen (vgl. Keilriemen, eine Monographie, herausgegeben von der Arntz-Optibelt-Gruppe Höxter, Verlag Ernst Heyer, Essen, S. 83 (1972)). Nach einem anderen Verfahren behandelt man die Thermoplastoberfläche mit einer benzinischen Lösung von Isocyanaten (Bayer- Taschenbuch für die Gummi-Industrie, 1963, S. 254). Man kann aber auch die Kautschukmasse mit haftvermittelnden Zusätzen ausrüsten. Geeignet sind z. B. Kombinationen aus Resorcin, Formaldehyd-Spendern, Kieselsäure, Zinkoxid und Fettsäuren (W. Kleemann, Mischungen für die Elastverarbeitung, Leipzig, 1982, S. 300).

Es sind mehrere Verbundsysteme aus PPE-haltigen Kunststoffen und vernetzten Kautschuken bekannt. All diesen Systemen ist jedoch gemeinsam, daß durch thermoplastische Verarbeitung ein Verbund nicht zu erzielen ist.

So beschreibt die DE-OS 31 35 851 Schichtkörper aus einem natürlichen oder synthetischen Kautschuk und einem mindestens partiell vernetzten Kunststoff.

Es ist bekannt, daß SBR- und EPR-Kautschuke sowie Polybutadiene nach längerer thermischer Behandlung eine unerwartet hohe Adhäsion an bestimmten Kunstoffen zeigen. Zu diesen Kunstoffen, die sich durch die wiederkehrende p-Oxyphenyleneinheit auszeichnen, gehören Poly(2,6-dimethyl-1,4-phenylen-ether), Polysulfone und Polycarbonate (P. Dreyfuß, M. L. Runge, J. Appl. Pol. Sci, Band 23, 1863 bis 1866 (1979)).

Die Verarbeitungsbedingungen für diese Verbindungen entsprechen denen von Vulkanisationen, d. h. es sind Vulkanisationshilfsmittel wie z. B. Peroxide und Schwefel erforderlich, und die Taktzeiten sind, - etwa verglichen mit thermoplastischen Verarbeitungsmethoden - wesentlich aufwendiger.

Die europäische Patentanmeldung 0 196 407 (Anmeldetag: 20.01.1986) nimmt die Priorität der deutschen Patentanmeldung P 35 07 506.6 (Anmeldetag: 04.03.1985) in Anspruch. Diese beschreibt ein "Verfahren zur Herstellung eines chemischen Verbundes zwischen Formmassen auf Basis von Polyphenylenethern einerseits und Doppelbindungen enthaltenden, mit Schwefel vulkanisierbaren Kautschuken andererseits." Auch die hierbei verwendeten Kautschuke sind thermoplastisch nicht mehr verarbeitbar.

Die zurückgezogene DE-OS 27 18 481 beansprucht ganz allgemein eine dreischichtige Verbundfolienbahn aus zwei äußeren thermoplastischen Kunststoffschichten und einer inneren kautschukhaltigen Elastomerschicht. Tatsächlich ist aber lediglich eine Folie mit Polyethylen als Außenschicht und Butylkautschuk als Innenschicht offenbart. Die Folie kann dadurch hergestellt werden, daß man die Kautschuke in poröser Form auf die thermoplastische Folie aufträgt und dann das Lösemittel verdunstet oder beide Stoffe coextrudiert. Der Fachmann ist nicht in der Lage, dieser Schrift eine konkrete technische Lehre zum Verbund anderer thermoplastischer Werkstoffe mit Elastomeren zu entnehmen.

Ein Schichtstoff, bestehend aus mindestens einer Polyphenylenether enthaltenden Schicht A und einer mindestens 40 Gewichtsprozent Styrol enthaltenden Schicht B, wird in der DE-OS 21 16 558 beschrieben. Die styrolhaltige Schicht kann entweder ausschließlich aus Homopolystyrol bestehen oder Copolymerisate mit bis zu 60 Gewichtsprozent "harter Comonomerer" wie Acrylnitril, (Meth)Acrylsäureester, Maleinsäureanhydrid umfassen oder 3 bis 30 Gewichtsprozent schlagfeste Styrolpolymerisate enthalten. Eine spezielle Ausführungsform, bei der als Styrolpolymerisat reines isotaktisches Polystyrol oder eine Abmischung mit ataktischem Polystyrol verwendet wird, ist Gegenstand der zurückgezogenen DE-OS 28 09 980. Die Schichtstoffe sind in beiden Fällen ganz bewußt auf die Kombination von zwei harten Kunststoffkomponenten beschränkt. Daher liegt der Anteil des Styrols in der Schicht B stets über 40 Gewichtsprozent.

Ziel der vorliegenden Erfindung war die Bereitstellung von Bauteilen, bestehend aus PPE-haltigen Formkörpern und elastomeren Thermoplasten. Nach dem Stand der Technik schien es nicht möglich zu sein, derartige Bauteile durch thermoplastische Behandlung herzustellen, die gerade wegen ihrer unvereinbaren Eigenschaftskombinationen von besonderem technischen Interesse sind.

Es wurden jetzt überraschend derartige Bauteile gefunden. Gegenstand der vorliegenden Erfindung sind aber nicht nur diese Bauteile entsprechend den Ansprüchen 1 bis 4, sondern auch die Verfahren zu ihrer Herstellung gemäß den Ansprüchen 5 und 6.

Die Bauteile weisen den großen Vorteil auf, daß sie thermoplastisch verarbeitbar sind.

Von besonderer Bedeutung ist die Tatsache, daß eine gute Verbundhaftung nicht nur bei reinen Polyphenylenethern beobachtet wird, sondern auch bei den technisch bedeutsamen Abmischungen des PPE mit Styrolpolymerisaten, bei denen die PPE-Komponente überwiegt.

Es gibt bisher keine befriedigende Erklärung für die gute Verbundhaftung. Man muß davon ausgehen, daß die Art der Bindung im vorliegenden Fall eine andere ist als im Falle der Covulkanisation, da die Verbundhaftung im ersteren Fall durch Erhöhung des Styrolanteils nicht verändert wird, während sie im zweiten Falle stark beeinträchtigt wird.

Die erfindungsgemäßen Bauteile, die meist die Form von Schichtkörpern haben, bestehen vorzugsweise aus 2 oder 3 Lagen eines PPE-haltigen Formkörpers und eines elastomeren Thermoplasten in abwechselnder Reihenfolge. Selbstverständlich können es auch vier oder mehr Lagen sein. Von Interesse sind aber auch Systeme, bei denen der Kunststoff oder umgekehrt der Thermoplast nur an bestimmten Stellen mit der zweiten Komponente beschichtet wird. Man denke etwa an Matten, die in regelmäßigen Abständen kleine Gummifüßchen tragen.

Die PPE-haltigen Formkörper können insbesondere Polystyrole und schlagzähmachende Polystyrole enthalten; der Anteil der Polyphenylenether sollte mindestens gleich groß sein wie der Anteil aller Styrolpolymerisate.

Enthalten die Formkörper kein Polystyrol, sollte der Anteil der Polyphenylenether, bezogen auf das Gewicht der Formkörper, mindestens 20 % betragen.

Die Formkörper können ferner Kautschuke, Polyoctenylene, Polyethylene, Polyamide, Verträglichkeitsvermittler und sonstige Zusatzstoffe, wie z. B. Glasfasern, enthalten.

Besonders bevorzugt sind

a.) die nach der deutschen Patentanmeldung P 34 24 219.8 (Anmeldetag 30.06.1984) erhältlichen Formkörper auf Basis von PPE, schlagfesten Styrolpolymerisaten und pulverförmigem, füllstoffhaltigen Kautschuk,

b.) die nach der deutschen Patentanmeldung P 35 18 277.6 (Anmeldetag 22.05.1985) erhältlichen Formkörper auf Basis von PPE und Polyoctenylenen,

c.) die nach der deutschen Patentanmeldung P 34 42 274.9 (Anmeldetag 20.11.1984) erhältlichen Formkörper auf Basis von PPE und Styrol-Butadien-Emulsionspolymerisaten sowie

d.) die nach der deutschen Patentanmeldung P 34 42 273.0 (Anmeldetag 20.11.1984) erhältlichen Formkörper auf Basis von PPE, Styrolpolymerisaten und Polyoctenylenen.

Die Herstellung der PPE-haltigen Formkörper erfolgt, sofern nicht anders angegeben, nach literaturbekannten Methoden.

Der elastomere Thermoplast ist ein styrolhaltiges Blockcopolymer vom Typ A-B-A mit 20 bis 40, vorzugsweise 25 bis 35, Gewichtsprozent Styrol als Block A. Der Block B stellt eine Weichphase aus vorzugsweise polymerisierten Butadien- oder Polyisopreneinheiten dar.

Die Copolymeren können linear oder verzweigt sein. Ihr Molekulargewicht beträgt, wenn sie linear sind, bevorzugt 80.000 bis 120.000, wenn sie verzweigt sind, 100.000 bis 300.000.

Bevorzugt werden Copolymere, deren Weichphase hydriert wurde. Besonders bevorzugt sind Copolymere, die durch Hydrierung von Copolymeren mit einer Weichphase aus 40 bis 50 % 1,2-Polybutadien und 60 bis 50 % 1,4- Polybutadien erhalten wurden. Entsprechende Blockpolymere werden auch als Styrol-Ethylen-Butylen- Styrol-Blockpolymer bezeichnet.

Die Copolymeren werden in der Regel nicht als solche, sondern mit den üblichen Hilfsmitteln wie z. B. Antioxidantien, UV-Stabilisatoren, Mineralölen, die vorzugsweise aromatenfrei sind, und Pigmenten compoundiert eingesetzt.

Die Fertigung der aus steifen und elastomeren Segmenten zusammengesetzten Bauteile kann ein- oder zweistufig erfolgen.

Einstufige Verfahren zur Herstellung von Verbundsystemen zwischen harten und elastomeren Segmenten sind für andere Werkstoffkombinationen unter den Bezeichnungen "Coextrusion", "einstufiges 2-Farbenspritzgießen" oder "2-Komponenten-Spritzgießen" bekannt.

Beim zweistufigen Verfahren beaufschlagt man ein vorgefertigtes Segment aus dem harten Thermoplasten z. B. durch Zusammenpressen, Spritzgießen oder Extrudieren mit dem elastomeren Thermoplasten. Dabei wird der elastomere Thermoplast auf mindestens die für seine Warmverformung notwendige Temperatur erwärmt. Geeignete Temperaturen liegen zwischen 180 und 300 °C, vorzugsweise zwischen 220 und 260 °C.

Die Bauteile gemäß der vorliegenden Erfindung können in Form von Schichtkörpern, Folien, Schichtbahnen, Matten in insert-outsert-Technik etc. in vielfältiger Weise als Armaturenteile, Dichtungsrahmen, Gehäuse, Rohr- und Schlauchkupplungen, Flansche, stoßabsorbierende Teile (z. B. Seitenteile von Kraftfahrzeugen), Schuhabsätze etc. Verwendung finden. Interessante Anwendungsmöglichkeiten bieten sich auch bei mit Elastomeren beschichteten Walzen und Rollen.

Beispiele

Werkstoffe

1 Harte Thermoplaste
1.1 Ein Polymerengemisch gemäß deutscher Offenlegungsschrift 35 18 277, bestehend aus

100 Gewichtsteilen Poly(2,6-dimethyl-1,4-phenylenether) mit einem J-Wert von 49 ml/g und

10 Gewichtsteilen VESTENAMER[R] 8012, einem Polyoctenylen mit einem Trans-Gehalt von 80%
1.2 VESTYRON[R] 114, ein Styrolhomopolymerisat der Firma HÜLS AKTIENGESELLSCHAFT, D-4370 Marl.
Die Kenndaten dieser Produkte sind der Broschüre "Kunststoffe von hüls", VESTYRON[R]
Ausgabe Sept. 1983, zu entnehmen.
1.3 VESTYRON[R] 616, ein schlagzäh modifziertes Styrolpolymerisat der Fa. HÜLS AKTIENGESELLSCHAFT, D-4370 Marl.
2 Elastomere Thermoplaste)
2.1 Kraton[R] G-1651, ein Styrol-Ethylen-Butylen-Styrol-Blockcopolymer der Shell AG mit 30 Gewichtsprozent Styrolanteil
2.2 Cariflex[R] TR 1102, ein Styrol-Butadien-Styrol-Blockcopolymer der Shell AG mit 30 % Styrolanteil.

Die Eigenschaften dieser Produkte sind den einschlägigen Merkblättern der Herstellerfirma zu entnehmen.
Die Fertigung von Verbundplatten erfolgte auf folgende Weise:
2 mm dicke Platten aus dem harten Thermoplasten wurden mit den krümel- bzw. granulatförmigen Elastomeren belegt und während eines Zeitraumes von 5 Minuten bei 200 °C zu 4 mm dicken Verbundplatten gepreßt.

| Beispiel | Harter Thermoplast | Elastomerer Thermoplast | Trennkraft N/mm |
|----------|--------------------|-------------------------|-----------------|
| 3.1 | 1.1 | 2.2 | 6,0 |
| 3.2 | 1.1 | 2.1 | 6,5 |
| 3.3 | 60 Teile 1.1 40 Teile 1.2 | 2.1 | 5,8 |
| 3.4 | 60 Teile 1.1 40 Teile 1.3 | 2.1 | 6,1 |

**Patentansprüche**

1. Bauteile aus mindestens 2 abwechselnd aufeinander folgenden Lagen eines Polyphenylenether (PPE)-haltigen Formkörpers und eines elastomeren Thermoplasten, dadurch gekennzeichnet, daß

a.) der Polyphenylenether (PPE)-haltige Formkörper entweder Polystyrol oder schlagzähmachendes Polystyrol enthält und der Anteil des Polyphenylenethers mindestens gleich groß wie der Anteil der Polystyrolkomponente ist oder
der PPE-haltige Formkörper keine Polystyrolkomponente enthält und der Anteil des Polyphenylenethers mindestens 20 %,bezogen auf das Gewicht des PPE-haltigen Formkörpers, beträgt und
b.) der elastomere Thermoplast ein Blockcopolymer vom Typ A-B-A ist, wobei A einen Styrol- und B einen Weichphasenblock kennzeichnet und der Anteil der Weichphase, bezogen auf das Gesamtgewicht des elastomeren Thermoplasten, mindestens 60 % beträgt.
2. Bauteile gemäß Anspruch 1,
dadurch gekennzeichnet, daß der PPE-haltige Formkörper, bezogen auf sein Gesamtgewicht, bis zu 20 % Kautschuke und Polyoctenylene enthält.

3. Bauteile gemäß den Ansprüchen 1 und 2,
dadurch gekennzeichnet,
daß der elastomere Thermoplast
ein Styrol-Butadien-Styrol-Blockcopolymeres mit 20 bis 40 Gewichtsprozent Styrol ist.

4. Bauteile gemäß den Ansprüchen 1 bis 3,
dadurch gekennzeichnet,
daß der elastomere Thermoplast
ein teilhydriertes Styrol-Butadien-Styrol-Blockcopolymeres mit 20 bis 40 Gewichtsprozent Styrol ist.

5. Verfahren zur Herstellung der Bauteile gemäß den Ansprüchen 1 bis 4,
dadurch gekennzeichnet,
daß man den PPE-haltigen Formkörper mit dem elastomeren Thermoplasten beaufschlagt und sodann zusammenpreßt, spritzgießt oder extrudiert.

6. Verfahren zur Herstellung der Bauteile gemäß den Ansprüchen 1 bis 5,
dadurch gekennzeichnet,
daß man den PPE-haltigen Formkörper mit dem elastomeren Thermoplasten coextrudiert oder spritzgießt.

**Claims**

1. A component composed of at least 2 successive alternating layers of a polyphenylene ether (PPE)-containing moulding and an elastomeric thermoplastic, characterized in that
a) the PPE-containing moulding contains either polystyrene or impact-modifying polystyrene and the proportion of polyphenylene ether is at least as great as the proportion of the polystyrene component or the PPE-containing moulding does not contain any polystyrene components and the proportion of polyphenylene ether is at least 20%, relative to the weight of the PPE-containing moulding, and
b) the elastomeric thermoplastic is a block copolymer of the A-B-A type, A being a styrene block and B being a flexible-phase block, and the proportion of the flexible phase, relative to the total weight of elastomeric thermoplastic, is at least 60%.

2. A component according to claim 1, characterized in that the PPE-containing moulding contains up to 20%, relative to its total weight, of rubbers and polyoctenylenes.

3. A component according to either of claims 1 and 2, characterized in that the elastomeric thermoplastic is a styrene-butadiene-styrene block copolymer containing 20 to 40% by weight of styrene.

4. A component according to any of claims 1 to 3, characterized in that the elastomeric thermoplastic is a partly hydrogenated styrene-butadiene-styrene block copolymer containing 20 to 40% by weight of styrene.

5. A process for the preparation of the component according to any of claims 1 to 4, characterized in that the PPE-containing moulding and the elastomeric thermoplastic are brought together and are then pressed, injection moulded or extruded.

6. A process for the preparation of the component according to any of claims 1 to 5, characterized in that the PPE-containing moulding is coextruded or injection moulded with the elastomeric thermoplastic.

**Revendications**

1. Eléments de construction constitués par au moins deux couches alternativement superposées d'un corps moulé renfermant des éthers polyphényléniques (EPP) et d'un thermoplaste élastomère, caractérisés par le fait que:
a) le corps moulé renfermant des EPP contient soit du polystyrène soit un polystyrène le rendant résistant au choc et que la fraction d'éthers polyphényléniques est au moins aussi grande que la fraction du composant polystyrénique, ou que
le corps moulé renfermant de l'EPP ne contient pas de composant polystyrénique et que la fraction d'éthers polyphényléniques est d'au moins 20%, relativement au poids du corps moulé renfermant des EPP,
et
b) que le thermoplaste élastomère est un copolymère en bloc du type A-B-A, A désignant un bloc styrénique et B un bloc de phases souples et que la fraction de la phase souple, relativement au poids global du thermoplaste élastomère, est au moins de 60 %.

2. Eléments de construction selon la revendication 1, caractérisés par le fait que le corps moulé renfermant des EPP contient, relativement à son poids total, jusqu'à 20 % de caoutchoucs et de poly-octénylènes.

3. Eléments de construction selon les revendications 1 et 2, caractérisés par le fait que le thermoplaste élastomère est un copolymère en bloc de styrène, de butadiène et de styrène comportant de 20 à 40% en poids de styrène.

4. Eléments de construction selon les revendications 1 à 3, caractérisés par le fait que le thermoplaste élastomère est un produit, partiellement hydrogéné, de copolymérisation en bloc de styrène, de butadiène et de styrène comportant de 20 à 40% en poids de styrène.

5. Procédé de fabrication des éléments de construction selon les revendications 1 à 4, caractérisé par le fait que l'on charge, avec le thermoplaste élastomère, le corps moulé contenant des EPP et qu'ensuite on le comprime, le coule par injection ou l'extrude.

6. Procédé de fabrication des éléments de construction selon les revendications 1 à 5, caractérisé par le fait que l'on co-extrude ou coule par injection, avec le thermoplaste élastomère, le corps moulé renfermant des EPP.